# DEMANDE DE BREVET EUROPEEN

(11) **EP 2 525 059 A1**
(43) Date de publication de la demande: **21.11.2012**
(21) Numéro de dépôt: 12164598.0
(22) Date de dépôt: 18.04.2012
(51) Int. Cl.: F01N 3/20

(54) **Dispositif de traitement d'oxydes d'azote s'évacuant dans une ligne d'échappement d'un moteur thermique**

(30) Priorité: 18.05.2011 FR 1154306
(71) Demandeur: PEUGEOT CITROËN AUTOMOBILES SA, 78140 Velizy-Villacoublay (FR)
(72) Inventeur: Chevalier, Philippe, 92500 Rueil Malmaison (FR); Chapel, Julien, 77380 Combs la Ville (FR)

(57) **Abrégé**

L'invention se rapporte à un dispositif de traitement des oxydes d'azotes rejetés dans une ligne d'échappement d'un moteur thermique. Le dispositif comprend un injecteur apte à injecter un agent réducteur dans ladite ligne d'échappement, en amont d'au moins un catalyseur de réduction sélective SCR, dès lors que les gaz d'échappement s'évacuant dans ladite ligne d'échappement atteignent une première valeur seuil (Tgb) de température. Le dispositif comporte un module de contrôle agencé pour comparer une valeur mesurée de température extérieure (Text) à au moins une valeur seuil (SText) pour décaler l'injection de l'agent réducteur à au moins une deuxième valeur seuil (Tgh) de température des gaz d'échappement, supérieure à ladite première valeur seuil (Tgb) de température des gaz d'échappement, dès lors que ladite température extérieure (Text) mesurée est inférieure à ladite valeur seuil (SText).

## Description

La présente invention concerne le domaine de la dépollution des gaz d'échappement issus d'un moteur thermique.

Plus particulièrement, l'invention se rapporte à un dispositif de traitement des oxydes d'azotes rejetés dans une ligne d'échappement des gaz de combustion d'un moteur thermique. L'invention se rapporte en outre à un système motorisé comprenant un moteur thermique et une ligne d'échappement, un procédé de traitement des oxydes d'azotes rejetés dans une ligne d'échappement de gaz d'un moteur thermique et un programme d'ordinateur.

Les niveaux d'émissions polluantes, notamment des véhicules automobiles, sont réglementés. Les normes régissant ces niveaux d'émissions polluantes sont d'ailleurs de plus en plus drastiques. C'est pourquoi les véhicules munis de moteurs thermiques sont de plus en plus souvent équipés de moyens de dépollution qui peuvent comprendre un ensemble de catalyseurs transformant les constituants toxiques des gaz d'échappement, tels que le monoxyde de carbone, les hydrocarbures imbrûlés (notés HC), ou les oxydes d'azote, en éléments moins toxiques comme la vapeur d'eau, l'azote et le dioxyde de carbone. Parmi les polluants rejetés dans l'environnement, les oxydes d'azotes (notés NOₓ) sont connus pour être à l'origine des pics de pollution. Ils provoquent les phénomènes de pluies acides et la formation d'ozone à basse altitude. Ils ont en outre des effets sur la santé humaine, pouvant notamment causer des problèmes d'irritation et d'inflammation de l'appareil respiratoire.

Dans ce contexte, les normes régissant les niveaux d'émissions polluantes d'oxydes d'azote NOₓ sont de plus en plus sévères. Ainsi, les normes successives applicables pour les moteurs diesel commercialisés en Europe, définissent des niveaux d'émission de polluants tolérés qui sont les suivants :

| Norme | NOₓ | HC + NOₓ |
|---|---|---|
| EURO 4 (mg/km) | 250 | 300 |
| EURO 5 (mg/km) | 180 | 230 |
| EURO 6 (mg/km) | 80 | 170 |

Selon la norme EURO 6, applicable en 2014, les niveaux tolérés pour les émissions des oxydes d'azote seront notamment divisés par 2,25 par rapport à leur niveau EURO 5, applicable depuis fin 2009.

Les normes EURO 5 peuvent être satisfaites pour les moteurs de petites ou moyennes cylindrées par une réduction des émissions à la source, par optimisation de la géométrie de la chambre de combustion, l'intégration de divers composants sur le moteur, comme par exemple un échangeur thermique et une vanne permettant la recirculation des gaz d'échappement dans la chambre de combustion, et une calibration très fine du moteur. Pour les moteurs plus puissants, ou pour satisfaire des normes encore plus sévères, telles que la norme EURO 6, on prévoit en outre des moyens de post-traitement spécifiques comme un catalyseur SCR (acronyme anglais pour « Selective Catalytic Reduction ») se présentant sous forme d'un filtre et permettant de réduire les oxydes d'azote NOₓ par l'ajout d'un réducteur. Le réducteur classiquement utilisé est l'ammoniac (NH₃), obtenu par dissociation de l'urée de synthèse en solution aqueuse, injectée dans une ligne d'échappement, en amont du catalyseur SCR. Les réactions impliquées dans la dissociation de l'urée sont les suivantes :
(NH₂)₂CO → HNCO + NH_{3:} pyrolyse à 120°C
HNCO + H₂O → CO₂ + NH₃ : hydrolyse à 180°C

Le catalyseur SCR sert à favoriser la réduction des oxydes d'azote NOₓ par l'ammoniac NH₃ issu de la décomposition de l'urée, selon les réactions suivantes :
NH₃ + 4 NO + O2 → 4 N₂ + 6 H₂O : réaction rapide
NH₃ + NO + NO₂ → 2 N₂ + 3 H₂O : réaction très rapide à environ 200°C
8 NH₃ + 6 NO₂ →7 N₂ + 12 H₂O : réaction lente

Plus on est capable de traiter de grandes quantités d'oxydes d'azotes NOₓ, plus il est possible d'avoir une chambre de combustion présentant un meilleur compromis CO₂. Pour pouvoir traiter le plus d'oxydes d'azote NOₓ possible, il faut injecter l'urée le plus tôt possible, c'est-à-dire pour une température des gaz d'échappement la plus basse possible. Par conséquent, classiquement l'injection d'urée dans la ligne d'échappement est ordonnée dès lors que la température des gaz d'échappement atteint un seuil de température de 175°C, permettant tout juste d'assurer une dissociation de l'urée.

Or, lors de l'injection de l'agent réducteur dans la ligne d'échappement des gaz, c'est-à-dire lors de l'injection de l'urée en solution aqueuse, des cristaux peuvent se former sur les parois internes de la ligne d'échappement lorsque celles-ci sont trop froides. Les cristaux sont en fait des cristaux d'acide cyanurique C₃H₃N₃O₃, formés à partir de trois molécules d'acide isocyanique HNCO issu de la dissociation partielle de l'urée. On obtient alors un dépôt solide sur les parois internes de la ligne d'échappement. Un tel encrassement diminue l'efficacité de la dépollution. Il nuit aussi au bon fonctionnement de la ligne d'échappement et peut entrainer des problèmes de casse des éléments constitutifs de la ligne situés en aval de l'injecteur d'urée. Ainsi, par exemple, la ligne d'échappement comprend un ou plusieurs flexibles. Un flexible permet notamment d'assurer un découplage mécanique entre des parties mobiles du moteur, engendrant des vibrations, et le reste de la ligne d'échappement fixée sous la caisse. Ce flexible doit rester souple et élastique pour pouvoir assurer sa fonction de découplage mécanique. Or, si un tel flexible est gorgé d'urée, et est encrassé par des cristaux issus de la dissociation partielle de l'urée, alors les cristaux gêneront son fonctionnement en diminuant son élasticité et l'amèneront progressivement à la rupture. De même, lorsque le flexible est situé légèrement en amont de l'injecteur d'urée, par exemple à environ 50mm, il peut aussi subir un encrassement qui remonte par capillarité.

Le document EP2 019 190 décrit un système de post-traitement de gaz d'échappement qui permet de retirer des cristaux issus de la cristallisation de l'acide cyanurique, lui-même issu de la décomposition partielle de l'urée, et qui se sont formés dans un mélangeur destiné à mélanger l'urée injectée aux gaz d'échappement circulant dans la ligne d'échappement. Pour cela, une pression différentielle est mesurée en amont et en aval du mélangeur, et lorsque la pression différentielle atteint un seuil prédéfini, une post-injection de carburant est réalisée pour augmenter la température des gaz d'échappement à une température supérieure ou égale à 360°C qui est la température de fusion des cristaux. Ainsi, les cristaux qui se déposent dans le mélangeur sont périodiquement éliminés.

L'inconvénient de ce système réside dans le fait que le mélangeur ainsi que la ligne d'échappement située en aval de l'injecteur d'urée continuent toujours de s'encrasser et il faut périodiquement monter la température des gaz d'échappement à une température haute d'au moins 360°C, qui est la température de fusion des cristaux. Or du fait que des cristaux continuent à se former, ils continuent d'endommager la ligne d'échappement située en aval de l'injecteur d'urée, et notamment ils continuent d'affecter la souplesse et l'élasticité des flexibles. Ce système permet seulement de détruire les cristaux une fois qu'ils sont apparus, mais il ne permet pas de prévenir et d'empêcher leur formation dans la ligne d'échappement située en aval de l'injecteur d'urée.

L'invention a donc pour but de remédier à au moins un des inconvénients de l'art antérieur. En particulier, l'invention vise à traiter efficacement une grande quantité d'oxydes d'azotes, tout en limitant l'encrassement de la ligne d'échappement, située en aval de l'injecteur d'urée.

A cet effet, l'invention a pour objet un dispositif de traitement des oxydes d'azotes rejetés dans une ligne d'échappement d'un moteur thermique, ledit dispositif comprenant un injecteur apte à injecter un agent réducteur dans ladite ligne d'échappement, en amont d'au moins un catalyseur de réduction sélective SCR, dès lors que les gaz d'échappement s'évacuant dans ladite ligne d'échappement atteignent une première valeur seuil de température. Ledit dispositif comporte un module de contrôle agencé pour comparer une valeur mesurée de température extérieure à au moins une valeur seuil et pour décaler l'injection de l'agent réducteur à au moins une deuxième valeur seuil de température des gaz d'échappement, supérieure à ladite première valeur seuil de température des gaz d'échappement, dès lors que ladite température extérieure mesurée est inférieure à ladite valeur seuil.

Ainsi, dès lors que la température extérieure est insuffisante pour que la température des parois internes de la ligne d'échappement permette une dissociation complète de l'agent réducteur, l'injection de l'agent réducteur est décalée dans le spectre de température des gaz d'échappement. De ce fait, les parois internes de la ligne d'échappement sont indirectement réchauffées par les gaz d'échappement et la dissociation de l'agent réducteur est plus efficace, si bien que l'encrassement de la ligne d'échappement située non seulement en aval mais aussi légèrement en amont de l'injecteur est grandement limité.

Selon d'autres caractéristiques optionnelles du dispositif:
- le dispositif est intégré dans un véhicule automobile et le module de contrôle tient en outre compte de la vitesse du véhicule pour le décalage de l'injection de l'agent réducteur,
- le dispositif comporte en outre un module estimateur agencé pour estimer une température de parois de ladite ligne d'échappement à partir de ladite valeur mesurée de température extérieure et transmettre la température estimée audit module de contrôle, lequel est agencé pour comparer la température estimée à au moins une autre valeur seuil et à décaler l'injection de l'agent réducteur à ladite au moins une deuxième valeur seuil de température des gaz d'échappement, supérieure à ladite première valeur seuil de température des gaz d'échappement, dès lors que la température estimée est inférieure à ladite au moins une autre valeur seuil,
- le dispositif est intégré dans un véhicule automobile et le module estimateur tient en outre compte de la température des gaz d'échappement s'évacuant dans la ligne d'échappement pour estimer la température de parois,
- le module estimateur tient en outre compte de la température des gaz d'échappement, mesurée après un temps prédéterminé suivant le démarrage du véhicule, pour estimer la température de parois,
- le module estimateur tient en outre compte du débit des gaz d'échappement et de la vitesse du véhicule pour estimer la température de parois.

L'invention porte en outre sur un véhicule automobile comprenant un dispositif de traitement des oxydes d'azote selon l'invention.

L'invention porte également sur un système motorisé comprenant un moteur thermique et une ligne d'échappement, ledit système étant apte à injecter un agent réducteur en amont d'un catalyseur de réduction sélective SCR pour traiter des oxydes d'azotes rejetés dans ladite ligne d'échappement par ledit moteur thermique, le système comprenant un dispositif de traitement des oxydes d'azote selon l'invention.

L'invention porte également sur un procédé de traitement des oxydes d'azotes rejetés dans une ligne d'échappement d'un moteur thermique, ledit procédé consistant à injecter un agent réducteur dans la ligne d'échappement, en amont d'au moins un catalyseur de réduction sélective SCR, dès lors que les gaz d'échappement s'évacuant dans ladite ligne d'échappement atteignent une première valeur seuil de température. Ledit procédé comprend en outre les étapes suivantes : mesure d'une température extérieure, comparaison de ladite température extérieure mesurée à au moins une valeur seuil, et décalage de l'injection de l'agent réducteur à au moins une deuxième valeur seuil de température des gaz d'échappement, supérieure à ladite première valeur seuil de température des gaz d'échappement, dès lors que ladite température extérieure mesurée est inférieure à ladite valeur seuil.

Selon d'autres caractéristiques optionnelles du procédé:
- le procédé comprend en outre une étape consistant à estimer une température de parois de la ligne d'échappement à partir de ladite température extérieure mesurée, l'étape de comparaison consiste à comparer la température estimée à au moins une autre valeur seuil, et l'étape de décalage de l'injection de l'agent réducteur à au moins une deuxième valeur seuil de température des gaz d'échappement, supérieure à ladite première valeur seuil de température des gaz d'échappement, est mise en oeuvre dès lors que la température estimée est inférieure à ladite au moins une autre valeur seuil,
- le procédé est mis en oeuvre pour le traitement des oxydes d'azote rejetés par un moteur thermique d'un véhicule et ladite température de parois est estimée à partir de ladite température extérieure mesurée et de la température des gaz d'échappement.

L'invention porte enfin sur un programme d'ordinateur comprenant des instructions de code de programme pour l'exécution des étapes du procédé de traitement des oxydes d'azote, lorsque ledit programme est exécuté par un processeur du dispositif de contrôle.

D'autres particularités et avantages de l'invention apparaîtront à la lecture de la description suivante faite à titre d'exemple illustratif et non limitatif, en référence aux Figures annexées qui représentent :
- Les Figures 1 à 3, trois schémas de trois exemples d'architecture de lignes d'échappement d'un moteur thermique,
- La Figure 4, un schéma d'un dispositif de traitement des oxydes d'azotes selon l'invention,
- La Figure 5, un schéma synoptique des étapes d'un procédé de traitement des oxydes d'azote selon l'invention.

Par oxydes d'azotes NOₓ on entend notamment les oxydes du type protoxyde N₂O, sesquioxyde N₂O₃, pentoxyde N₂O₅, monoxyde NO et dioxyde NO₂.

Les NOₓ étant très polluants, des procédés ont été élaborés pour améliorer le compromis NOₓ/CO₂, et notamment pour réduire les rejets de NOₓ tout en limitant fortement les rejets de CO₂. Un tel compromis amène à ordonner une injection d'urée à une certaine température des gaz d'échappement, mesurée au nez de l'injecteur d'urée, c'est-à-dire juste en amont de l'injecteur d'urée. Ce seuil de température des gaz d'échappement à partir duquel l'injection d'urée peut être ordonnée est fixé à la température la plus basse permettant la dissociation de l'urée. Ainsi, l'urée peut être injectée dès que la température des gaz d'échappement atteint une température seuil, dite basse, de 175°C. L'urée est en outre injectée lorsque le moteur se trouve dans une zone dite de pollution qui correspond à un régime moteur compris entre par exemple 0 et 3000 tours/minute et une pression moyenne effective PME comprise entre par exemple 0 et 14.

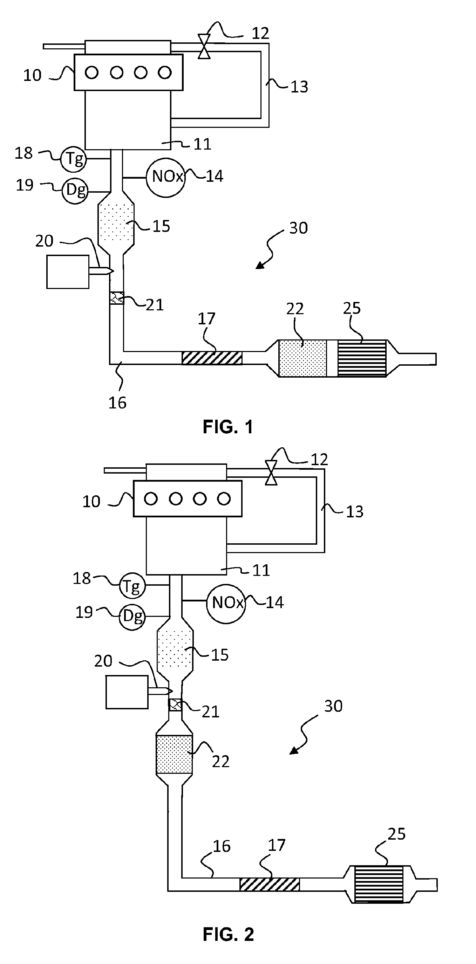

Les Figures 1 à 3 représentent de manière très schématique des architectures de lignes d'échappement 30 sur lesquelles le dispositif de traitement des oxydes d'azote selon l'invention peut s'appliquer. Ces architectures ne sont que des exemples illustratifs, et le dispositif de traitement selon l'invention peut s'appliquer à d'autres types de lignes pour limiter l'encrassement de la ligne d'échappement située en aval de l'injecteur d'urée. Les mêmes références sont utilisées pour désigner les mêmes éléments dans ces Figures 1 à 3.

Sur la Figure 1, on a représenté de manière très schématique un moteur thermique 10 ayant à titre d'exemple quatre cylindres, une chambre de combustion 11 et un système EGR (acronyme anglais pour « Exhaust Gas Recirculation ») de recirculation des gaz d'échappement dans la chambre de combustion 11 comprenant un échangeur thermique 13 et une vanne EGR 12. La présence de ce système EGR n'est pas indispensable. A la sortie de la chambre de combustion 11, les gaz d'échappement passent dans un catalyseur d'oxydation 15 DOC (acronyme anglais pour « Diesel Oxydation Catalyst ») dont le rôle premier est d'oxyder le monoxyde de carbone contenu dans les gaz en sortie de moteur, en dioxyde de carbone moins toxique pour la santé. Ce catalyseur DOC permet aussi de traiter les hydrocarbures HC.

En aval du catalyseur d'oxydation DOC 15, les gaz d'échappement traversent au moins un autre catalyseur SCR 22 pour le traitement des oxydes d'azote NOₓ. La présence d'un tel catalyseur implique la présence d'un injecteur 20, situé en amont de ce(s) catalyseur(s) SCR 22, pour injecter un agent réducteur, tel que l'urée. Selon les cas, on peut en outre prévoir un mélangeur statique 21 entre l'injecteur 20 et le(s) catalyseur(s) SCR 22. La présence d'un tel mélangeur 21 n'est pas indispensable. Il permet d'assurer le mélange de l'urée injectée aux gaz d'échappement s'évacuant dans la ligne d'échappement. En aval du catalyseur SCR 22 est en outre disposé un filtre à particules 25 destiné à l'élimination des particules de suies. Le catalyseur SCR 22 est par exemple accolé au filtre à particules 25 et peut être disposé en amont ou en aval de ce filtre à particules 25. Il peut en outre être intégré au filtre à particules 25. Les différents éléments et catalyseurs sont reliés les uns aux autres par des tubes 16 et/ ou des flexibles 17. Une ligne d'échappement 30 comprend en effet un ou plusieurs flexibles 17. Ces flexibles ont la particularité d'être souples et élastiques et permettent ainsi d'assurer un découplage mécanique entre les pièces mobiles du moteur, situées dans le sous capot, et le reste de la ligne d'échappement fixée sous la caisse. Si un flexible est encrassé par des cristaux issus de la dissociation partielle de l'urée, alors il perd progressivement de sa souplesse et fini par se casser. Sur la Figure 1, l'injection de l'agent réducteur au moyen de l'injecteur 20 est réalisée en amont du flexible 17 représenté en traits hachurés.

La Figure 2 représente une architecture semblable à celle de la Figure 1, à la différence près que le catalyseur SCR 22 ne se trouve plus accolé au filtre à particules 25. De la même manière que pour la Figure 1, la ligne d'échappement peut comporter plusieurs catalyseurs SCR 22. Le catalyseur SCR 22 peut être placé aussi bien en amont qu'en aval du filtre à particules 25. Sur la Figure 2, il est représenté en amont du filtre à particules 25.

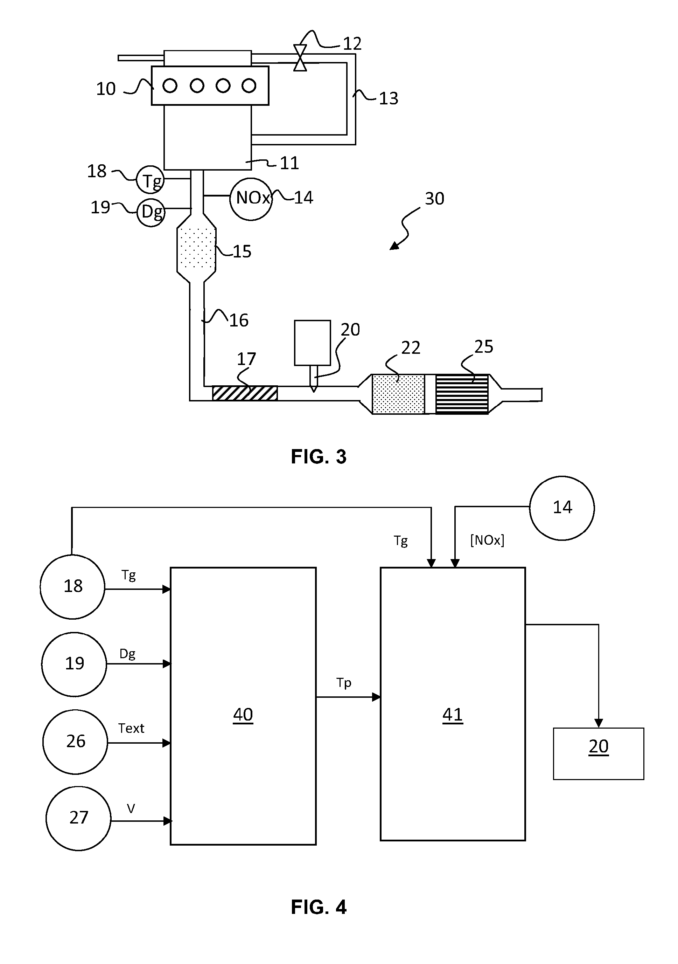

La Figure 3 représente une architecture semblable à celle de la Figure 1, à la différence près que l'injecteur 20 d'urée est disposé en aval du flexible 17. Dans ce cas, ce flexible peut tout de même subir un encrassement lié à la dissociation partielle de l'urée s'il est situé légèrement en amont de l'injecteur d'urée, par exemple à environ 50 mm. Dans un tel cas, l'encrassement remonte en effet par capillarité. De même, le reste des éléments composant cette ligne d'échappement, situés en aval de l'injecteur, sont toujours sujets à encrassement.

Sur toutes ces Figures on a schématisé un moteur diesel à 4 cylindres. Ce n'est qu'un exemple illustratif, l'invention s'appliquant à n'importe quel moteur thermique, qu'il soit diesel, à essence ou hybride.

Sur chacune de ces architectures, un capteur 18, placé au nez de l'injecteur d'urée 20, plus particulièrement en amont de l'injecteur 20, et même en amont du catalyseur d'oxydation DOC 15, permet de mesurer la température Tg des gaz d'échappement s'évacuant dans la ligne 30 d'échappement. De même, un autre capteur 14 peut être disposé au même endroit pour mesurer le taux d'oxydes d'azote NOₓ rejetés en sortie de la chambre à combustion. Ainsi, la connaissance du taux de NOₓ rejetés permet de quantifier la quantité d'urée à injecter pour le traitement des NOₓ. Enfin, un autre capteur 19, disposé sensiblement au même endroit, permet de mesurer le débit Dg des gaz d'échappement dans la ligne 30 d'échappement. Les capteurs 14 et 19 ne sont cependant pas indispensables car les valeurs du taux de NOₓ et de débit Dg des gaz d'échappement peuvent également être estimées.

La Figure 4 schématise de manière très simplifiée un dispositif de traitement des NOₓ selon l'invention. Ce dispositif comporte avantageusement un module de contrôle 41. Le module de contrôle 41 peut être réalisé sous forme d'un processeur convenablement programmé. Un ensemble d'instructions logicielles permet au processeur d'effectuer différentes opérations décrites dans ce qui suit en relation avec le module de contrôle.

Selon un premier mode de réalisation simplifié du dispositif, le module de contrôle 41 permet de comparer une valeur de température extérieure Text, mesurée par un capteur 26 disposé sur le véhicule, à au moins une valeur seuil SText. En effet, lorsque la température extérieure est inférieure à une valeur seuil SText prédéterminée, par exemple 5°C, les parois internes de la ligne d'échappement sont beaucoup plus difficiles à maintenir à une température telle que la dissociation de l'urée puisse se faire correctement et complètement. Dans un tel cas, les parois n'étant pas à une température suffisante, des cristaux d'acide cyanurique risquent de se former et d'encrasser ainsi les éléments constitutifs de la ligne d'échappement situés en aval de l'injecteur 20 d'urée. Selon ce mode de réalisation, le module de contrôle 41 tient compte également de la vitesse du véhicule et/ou de la charge du moteur. Ainsi, lorsque le module de contrôle 41 détecte que le véhicule roule à faible vitesse, ou que la charge du moteur est faible, et que la température extérieure est inférieure à une valeur seuil SText, par exemple 5°C, il décale l'ordre de début d'injection d'urée, dans le spectre de températures des gaz d'échappement. Dans ce cas, l'ordre d'injection de l'urée est décalé à une valeur seuil haute Tgh de température des gaz d'échappement, par exemple de 215°C ou 220°C, supérieure à la première valeur seuil basse Tgb, de 175°C, de température des gaz d'échappement. Ainsi, lorsque les conditions ne sont pas favorables à l'obtention d'une température des parois internes de la ligne d'échappement qui soit suffisante pour une dissociation complète de l'urée, l'injection est décalée de sorte qu'elle est ordonnée dès lors que les gaz d'échappement ont atteint le seuil haut, permettant ainsi de réchauffer indirectement les parois.

Selon un deuxième mode de réalisation, permettant d'ordonner une injection d'urée de manière plus précise, le dispositif comporte en outre un module estimateur 40. Ce module estimateur permet, à partir de données mesurées par des capteurs, d'estimer la température Tp des parois internes de la ligne 30 d'échappement des gaz. Pour faire son estimation, le module estimateur 40 tient essentiellement compte de la température extérieure Text mesurée par le capteur 26 classiquement disposé à l'extérieur du véhicule. Le module estimateur 40 permet plus particulièrement d'estimer la température Tp des parois internes de la ligne d'échappement 30 à partir de données mesurées au moyen de capteurs 18, 19, 26, 27 disposés sur la ligne d'échappement 30 et dans le véhicule. Ainsi, les capteurs 18 et 19, disposés sur la ligne 30 d'échappement, en amont de l'injecteur 20 d'urée, permettent de mesurer respectivement la température des gaz d'échappement Tg et le débit des gaz d'échappement Dg. Le capteur 19 n'est cependant pas indispensable, la valeur du débit des gaz pouvant être estimée. Un autre capteur 26, disposé sur le véhicule, permet de mesurer la température extérieure Text. Enfin, un capteur 27, embarqué dans le véhicule, permet de mesurer la vitesse v du véhicule. Lorsque toutes ces données sont connues, et pour une ligne d'échappement connue, c'est-à-dire en fonction de l'inertie, de la matière, de l'épaisseur et de l'isolation de la ligne d'échappement, le module estimateur 40 estime la température Tp des parois internes de la ligne d'échappement. Cette température estimée Tp est ensuite transmise au module de contrôle 41. En fonction de la température estimée Tp, de la température des gaz d'échappement Tg, et éventuellement du taux de NOₓ rejetés, le module de contrôle 41 pilote l'injecteur 20 d'urée.

Selon une variante de réalisation, le module estimateur 40 peut aussi estimer la température des parois internes de la ligne d'échappement sur la seule base de la température Tg des gaz d'échappement lorsqu'elle est mesurée après un temps prédéterminé suivant le démarrage du véhicule.

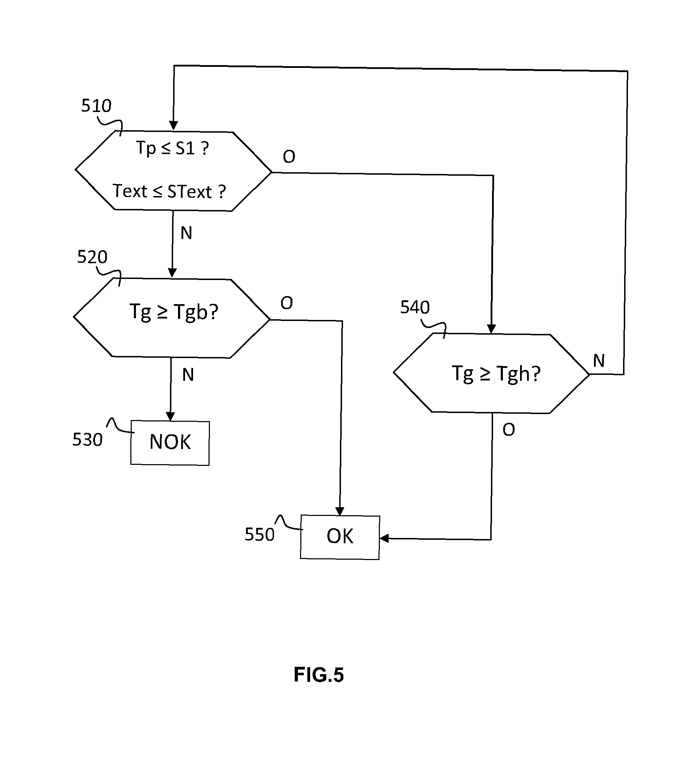

Pour mieux comprendre le fonctionnement de ce dispositif, la Figure 5 illustre des étapes mises en oeuvre dans le procédé de traitement des NOₓ. Après avoir reçu la mesure de la température des gaz d'échappement Tg mesurée par le capteur 18, et après avoir reçu l'estimation de la température Tp des parois de la ligne d'échappement, estimée par le module estimateur 40, le module de contrôle 41 compare la température estimée Tp à au moins une première valeur seuil S1 (étape 510). Dans le cas du premier mode de réalisation, cette étape 510 consiste à comparer directement la température extérieure Text mesurée à une valeur seuil SText. Si la température estimée Tp est supérieure à cette première valeur seuil S1, ou si la température extérieure Text est supérieure à la valeur seuil SText dans le cas du premier mode de réalisation, alors le module de contrôle 41 passe à l'étape 520 et vérifie si la température des gaz d'échappement Tg a atteint le seuil bas d'ordre d'injection d'urée, noté Tgb sur la Figure 5. Si c'est le cas, le module de contrôle 41 passe à l'étape 550 et commande l'injection d'urée. Si ce n'est pas le cas, le module de contrôle 41 ne fait rien et ne commande surtout pas l'injection d'urée car si la température des gaz d'échappement est trop faible, l'urée ne peut pas se dissocier convenablement (étape 530).

En revanche, lorsque la température estimée Tp est inférieure à la valeur seuil S1, ou lorsque la température extérieure Text est inférieure à la valeur seuil SText dans le cas du premier mode de réalisation, le module de contrôle 41 compare alors la température des gaz d'échappement Tg à au moins une deuxième valeur seuil prédéterminée de température des gaz d'échappement, dite haute, notée Tgh sur la Figure 5, supérieure à la première valeur seuil basse Tgb (étape 540). Si la valeur seuil haute n'est pas atteinte, le module de contrôle 41 ne commande pas l'injection d'urée et reprend les étapes de comparaison à partir de l'étape 510. En revanche, dès que la température des gaz d'échappement Tg atteint la valeur seuil haute prédéterminée Tgh, alors le module de contrôle 41 commande le début d'injection d'urée (étape 550). La quantité d'urée injectée peut en outre être contrôlée grâce à une mesure, faite par un capteur 14, ou une estimation, du taux de NOₓ rejeté dans les gaz d'échappement. En fonction de la teneur en NOₓ, le module de contrôle 41 détermine la quantité d'urée à injecter afin de les éliminer. Les gaz d'échappement à une température plus élevée permettent indirectement de réchauffer les parois de la ligne d'échappement et d'obtenir une meilleure dissociation de l'urée, si bien que les risques d'encrassement de la ligne d'échappement sont considérablement limités.

Pour permettre un décalage encore plus précis de l'ordre de début d'injection d'urée, il est possible de définir plusieurs valeurs seuils hautes d'ordre d'injection d'urée Tgh, comprises par exemple entre 200 et 220°C. Dans ce cas, les valeurs seuils hautes sont respectivement déterminées en fonction d'intervalles de températures dans lesquels se situe la température de parois Tp estimée, ou la température extérieure selon le mode de réalisation.

Le dispositif de traitement des oxydes d'azote NOₓ décrit permet ainsi non seulement de réduire une quantité sensiblement maximum de NOₓ, mais aussi de limiter l'encrassement de la ligne d'échappement, et plus particulièrement du ou des flexibles lorsque l'injection d'urée a lieu en amont de celui (ceux)-ci, ou légèrement en aval. Cette limitation de l'encrassement de la ligne d'échappement permet de fiabiliser la qualité du flexible et de limiter considérablement les risques de casse au cours du temps.

## Revendications

1. Dispositif de traitement des oxydes d'azotes (NOₓ) rejetés dans une ligne d'échappement (30) d'un moteur thermique (10), ledit dispositif comprenant un injecteur (20) apte à injecter un agent réducteur dans ladite ligne d'échappement (30), en amont d'au moins un catalyseur de réduction sélective SCR (22), dès lors que les gaz d'échappement s'évacuant dans ladite ligne d'échappement (30) atteignent une première valeur seuil de température (Tgb), **caractérisé en ce que** ledit dispositif comporte un module de contrôle (41) agencé pour comparer une valeur mesurée de température extérieure (Text) à au moins une valeur seuil (SText) et pour décaler l'injection de l'agent réducteur à au moins une deuxième valeur seuil de température des gaz d'échappement (Tgh) supérieure à ladite première valeur seuil de température des gaz d'échappement (Tgb), dès lors que ladite température extérieure (Text) mesurée est inférieure à ladite valeur seuil (SText).

2. Dispositif selon la revendication 1, **caractérisé en ce qu'**il comporte en outre un module estimateur (40) agencé pour estimer une température (Tp) de parois de ladite ligne d'échappement (30) à partir de ladite valeur mesurée de température extérieure (Text) et transmettre la température estimée (Tp) audit module de contrôle (41), et **en ce que** ledit module de contrôle est agencé pour comparer la température estimée (Tp) à au moins une autre valeur seuil (S1) et à décaler l'injection de l'agent réducteur à ladite au moins une deuxième valeur seuil de température des gaz d'échappement (Tgh), supérieure à ladite première valeur seuil de température des gaz d'échappement (Tgb), dès lors que la température estimée (Tp) est inférieure à ladite au moins une autre valeur seuil (S1).

3. Dispositif selon la revendication 1, **caractérisé en ce qu'**il est intégré dans un véhicule automobile et **en ce que** le module de contrôle (41) tient en outre compte de la vitesse (v) du véhicule pour le décalage de l'injection de l'agent réducteur.

4. Dispositif selon la revendication 2, **caractérisé en ce qu'**il est intégré dans un véhicule automobile et **en ce que** le module estimateur (40) tient en outre compte de de la température des gaz d'échappement (Tgaz) s'évacuant dans la ligne d'échappement pour estimer la température (Tp) de parois.

5. Véhicule automobile comprenant le dispositif de traitement des oxydes d'azote (NOₓ) selon l'une quelconque des revendications 1 à 4.

6. Système motorisé comprenant un moteur thermique (10) et une ligne d'échappement (30), ledit système étant apte à injecter un agent réducteur en amont d'un catalyseur de réduction sélective SCR (22) pour traiter des oxydes d'azotes rejetés dans ladite ligne d'échappement (30) par ledit moteur thermique (10), **caractérisé en ce qu'**il comprend un dispositif de traitement des oxydes d'azote selon l'une des revendications 1 à 4.

7. Procédé de traitement des oxydes d'azotes (NOₓ) rejetés dans une ligne d'échappement (30) d'un moteur thermique (10), ledit procédé consistant à injecter un agent réducteur dans la ligne d'échappement (30), en amont d'au moins un catalyseur de réduction sélective SCR (22), dès lors que les gaz d'échappement s'évacuant dans ladite ligne d'échappement (30) atteignent une première valeur seuil de température (Tgb), **caractérisé en ce que** ledit procédé comprend en outre les étapes suivantes :
- mesure d'une température extérieure (Text),
- comparaison de ladite température extérieure (Text) mesurée à au moins une valeur seuil (SText), et
- décalage de l'injection de l'agent réducteur à au moins une deuxième valeur seuil de température des gaz d'échappement (Tgh), supérieure à ladite première valeur seuil de température des gaz d'échappement (Tgb), dès lors que ladite température extérieure (Text) mesurée est inférieure à ladite valeur seuil (SText).

8. Procédé selon la revendication 7, **caractérisé en ce qu'**il comprend en outre une étape consistant à estimer une température (Tp) de parois de la ligne d'échappement (30) à partir de ladite température extérieure (Text) mesurée, **en ce que** l'étape de comparaison consiste à comparer la température estimée (Tp) à au moins une autre valeur seuil (S1), et **en ce que** l'étape de décalage de l'injection de l'agent réducteur à au moins une deuxième valeur seuil de température des gaz d'échappement (Tgh), supérieure à ladite première valeur seuil de température des gaz d'échappement (Tgb), est mise en oeuvre dès lors que la température estimée (Tp) est inférieure à ladite au moins une autre valeur seuil (S1).

9. Procédé selon la revendication 7 ou 8, **caractérisé en ce qu'**il est mis en oeuvre pour le traitement des oxydes d'azote rejetés par un moteur thermique d'un véhicule et **en ce que** ladite température (Tp) de parois est estimée à partir de ladite température extérieure (Text) mesurée et de la température (Tg) des gaz d'échappement.

10. Programme d'ordinateur comprenant des instructions de code de programme pour l'exécution des étapes du procédé de traitement d'oxydes d'azote (NOₓ) selon l'une des revendications 7 à 9, lorsque ledit programme est exécuté par un processeur d'un module de contrôle (41).
